Europäisches Patentamt

European Patent Office

Office européen des brevets

(11) Numéro de publication: **0 362 016**
**A1**

(12) # DEMANDE DE BREVET EUROPEEN

(21) Numéro de dépôt: **89402534.5**

(22) Date de dépôt: **15.09.89**

(51) Int. Cl.⁵: **F16H 29/16 , B62M 9/08**

(30) Priorité: **27.09.88 FR 8812584**

(43) Date de publication de la demande:
**04.04.90 Bulletin 90/14**

(84) Etats contractants désignés:
**AT BE CH DE ES GB IT LI LU NL SE**

(71) Demandeur: **STE LOOK**
**Rue de la Pique, B.P. No. 72**
**F-58004 Nevers Cédex(FR)**

(72) Inventeur: **Mercat, Jean-Pierre**
**24, rue Gambetta**
**F-37110 Château Renault(FR)**

(74) Mandataire: **Tony-Durand, Serge**
**Cabinet Tony-Durand 77, rue Boissière**
**F-75116 Paris(FR)**

(54) **Variateur de vitesse.**

(57) Variateur de vitesse comprenant deux éléments -respectivement menant et mené - montés rotatifs autour de deux axes parallèles dont l'un est déplaçable par rapport à l'autre. Ces deux éléments sont reliés par une série de bielles d'entraînement (18a, 18b) dont l'une des extrémités s'articule sur l'un d'eux en différents points d'un cercle de même axe, cependant que leur extrémité opposée est susceptible d'être accouplée avec l'autre élément en un point d'un cercle de même axe que cet élément, grâce à des moyens d'accouplement unidirectionnels. Ces moyens d'accouplement consistent en des patins (24) montés articulés sur l'extrémité correspondante des bielles d'entraînement et aptes à se coincer, chacun à tour de rôle, sur une piste circulaire prévue sur l'élément correspondant du variateur, cependant que les autres patins glissent alors sur cette piste, toutes les bielles d'entraînement (18a, 18b) gravitant dans un même plan diamétral ou dans deux plans parallèles.

Ce variateur de vitesse peut faire l'objet de nombreuses applications. Ainsi il peut équiper la roue arrière d'un cycle.

FIG. 4

# Variateur de vitesse

La présente invention est relative aux variateurs de vitesse permettant une infinité de rapports de vitesse entre deux arbres rotatifs différents, et ce sur une plage plus ou moins large. De tels variateurs de vitesse sont susceptibles de très nombreuses applications. Ainsi ils peuvent être utilisés sur des véhicules à moteur ou sur des cycles, ou bien encore sur des machines ou dispositifs mécaniques quelconques.

Plus précisément, l'invention concerne les variateurs de vitesse du type comprenant deux éléments -respectivement menant et mené - montés rotatifs autour de deux axes parallèles et dont l'un est déplaçable par rapport à l'autre, ces deux éléments étant reliés par une série de bielles d'entraînement dont l'une des extrémités s'articule sur l'un d'eux en différents points d'un cercle de même axe, cependant que leur extrémité opposée est susceptible d'être accouplée avec l'autre élément en un point d'un cercle de même axe que cet élément, grâce à des moyens d'accouplement unidirectionnels. Ainsi la variation de l'écartement entre les axes des deux éléments - menant et mené - d'un tel variateur permet de faire varier, de façon continue, le rapport de transmission de celui-ci.

Le document EP 208.473 décrit un variateur de vitesse de ce type. Dans celui-ci, l'un des éléments rotatifs de transmission porte une série de bras articulés dont les extrémités constituent des cliquets destinés à venir en prise avec une roue à rochet comportant une denture intérieure. La modification de l'excentrement de l'un des éléments rotatifs par rapport à l'autre entraîne une variation de la position angulaire des bras d'accouplement, et par suite une variation du rapport de transmission.

Cependant cette solution présente un certain nombre d'inconvénients. L'un de ceux-ci réside dans le fait que l'accouplement entre les deux éléments rotatifs de transmission n'a lieu que lorsque le cliquet en service est engagé au fond d'un intervalle entre deux dents de la roue à rochet. Par ailleurs, cette solution ne présente pas une résistance mécanique pleinement satisfaisante car les dents de la roue à rochet sont amenées à encaisser des efforts extrêmement importants.

C'est pourquoi la présente invention a pour objet un variateur qui est conçu de façon à éliminer ces inconvénients.

A cet effet, ce variateur, du type rappelé précédemment, est caractérisé en ce que les moyens d'accouplement des bielles d'entraînement avec l'un des éléments de ce variateur consistent en des patins montés articulés sur l'extrémité correspondante de ces bielles et aptes à se coincer, chacun à tour de rôle, sur une piste circulaire prévue sur l'élément correspondant du variateur, cependant que les autres patins glissent alors sur cette piste, toutes les bielles d'entraînement gravitant dans un même plan diamétral.

Grâce à cet agencement, sous l'effet de la rotation de l'élément menant de ce variateur, les patins d'accouplement portés par les bielles d'entraînement viennent l'un après l'autre, à tour de rôle, en position de coïncement. Ainsi, la venue en prise d'un autre patin d'accouplement avec l'élément rotatif en regard s'effectue en un point quelconque de la piste ou de la gorge circulaire de celui-ci dès que se produit le coïncement de cet organe. Par ailleurs, l'agencement prévu assure une résistance mécanique pleinement satisfaisante car l'accouplement s'effectue par coïncement sur une surface de contact relativement importante.

Dans une forme de réalisation avantageuse du variateur selon l'invention, la piste de coïncement des patins d'accouplement comprend deux parties concentriques disposées de part et d'autre de ceux-ci, à savoir : une gorge annulaire de section triangulaire ou trapézoïdale, et un anneau de surface cylindrique, chaque patin présentant en regard des parties de même forme.

Grâce à sa conception, cette forme de réalisation permet un coïncement particulièrement efficace des patins d'accouplement. Il permet également la transmission de couples d'entraînement importants du fait même de l'importance de la surface d'appui des patins d'accouplement sur les pistes correspondantes de coïncement.

Selon une autre caractéristique de cette forme particulière de réalisation, l'élément menant du variateur étant de plus grand diamètre que l'élément mené, les bielles d'entraînement s'articulent sur ce dernier élément dont l'axe est fixe, cependant que l'axe de l'élément menant est mobile, la gorge et l'anneau cylindrique de la piste de coïncement des patins d'accouplement étant prévus sur l'élément menant.

Cependant d'autres particularités et avantages du variateur de vitesse selon l'invention apparaitront au cours de la description suivante. Celle-ci concerne, à simple titre d'exemple, un variateur équipant la roue arrière d'une bicyclette. Mais encore une fois ce variateur pourrait donner lieu à toute autre application.

La présente description est donnée en référence au dessin annexé à simple titre indicatif, et sur lequel :

La figure 1 est une vue en coupe axiale d'un variateur de vitesse selon l'invention équipant la roue arrière d'une bicyclette, les éléments menant et mené étant représentés dans une position non excentrée.

La figure 2 est une vue en coupe de ce même variateur selon différents plans de coupe, parallèles au plan transversal médian II-II de la figure 1, les éléments menant et mené du variateur étant représentés en position excentrée.

La figure 3 est une vue éclatée en perspective de certains des organes principaux du présent variateur.

Les figures 4 et 5 sont des vues schématiques illustrant les moyens de variation de l'excentrement susceptible d'être réalisé entre l'élément menant et l'élément mené du présent variateur.

La figure 6 est une vue partielle en coupe, selon le plan II-II de la figure 1, et qui représente l'un des organes unidirectionnels d'accouplement prévus entre l'élément menant et l'élément mené.

Les figures 7 et 8 sont deux vues partielles en coupe transversale représentant deux détails de ce variateur.

Les figures 9 et 10 sont des vues partielles en coupe, similaires à la figure 7, et qui illustrent deux autres formes de réalisation des organes d'accouplement.

Les figures 11 et 13 sont des vues similaires à la figure 6 mais qui représentent deux autres formes encore de réalisation des organes d'accouplement.

Les figures 12 et 14 sont des vues correspondantes en coupe, respectivement suivant les lignes XII-XII de la figure 11 et XIV-XIV de la figure 13.

La figure 15 est une vue partielle, similaire à la figure 2, mais qui représente une autre forme de réalisation.

La figure 16 en est une vue partielle en coupe selon la ligne XVI-XVI de la figure 15.

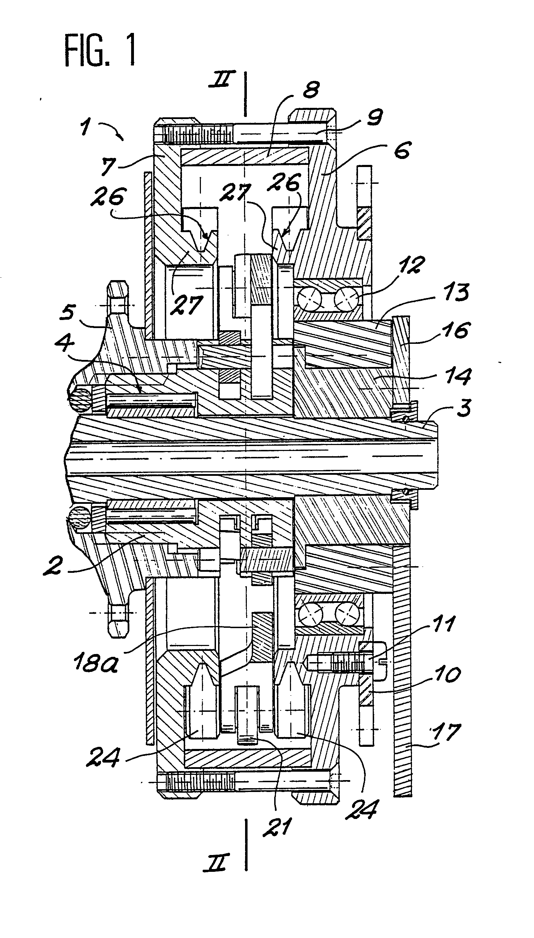

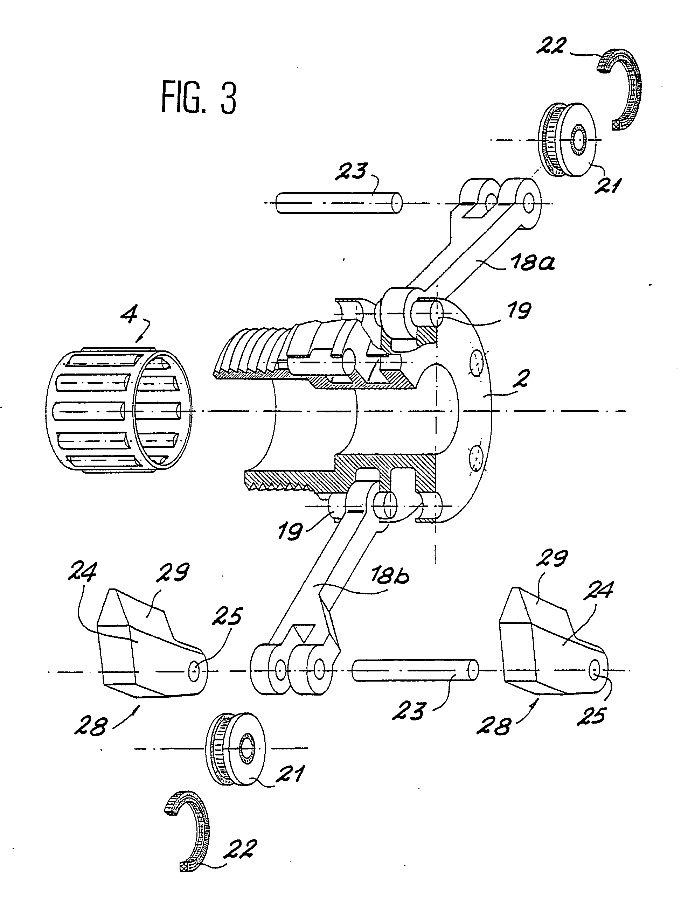

Ainsi qu'il a déjà été indiqué, le variateur représenté à titre d'exemple sur les figures 1 à 8 équipe la roue arrière d'une bicyclette.

Les éléments -menant et mené- de ce variateur sont constitués respectivement par un tambour externe désigné par la référence générale 1 et une douille interne 2 montée rotative autour de l'axe 3 de la roue correspondante, et ce avec interposition d'un roulement à aiguilles 4, l'une des extrémités de cette douille étant vissée à l'intérieur du moyeu 5 de la roue à entraîner. Quant au tambour 1, il est constitué par l'assemblage de deux flasques latéraux 6 et 7 et d'un anneau cylindrique intermédiaire 8, la solidarisation de ces pièces étant assurée par une série de boulons 9.

Sur le flasque externe 6 de ce tambour est rapporté le pignon arrière 10 d'entraînement de la roue correspondante, lequel est destiné à recevoir la chaîne du pédalier, ce pignon étant fixé en place au moyen d'une série de vis 11. Le tambour 1 est monté rotatif autour d'un roulement à billes 12 porté par une bague 13, elle-même montée autour d'une bague interne 14 disposée sur l'axe fixe 3 de la roue correspondante.

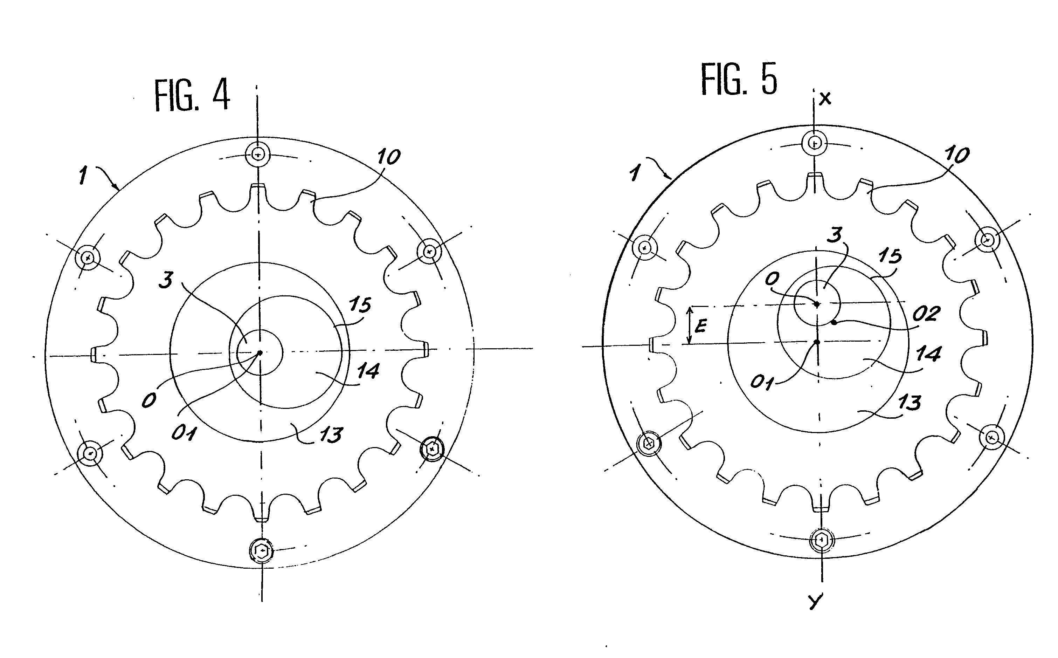

A ce sujet il convient de noter que ces bagues, toutes deux de contour extérieur cylindrique, sont engagées l'une dans l'autre, mais que le logement cylindrique 15, prévu à l'intérieur de la bague externe 13, pour recevoir la bague interne 14 est excentré. Les centres $O_1$ et $O_2$ de ces deux bagues sont donc distincts. De plus, la bague interne 14 est elle-même montée de façon excentrée sur l'axe 3 de la roue. En effet le centre $O_1$ du logement prévu dans cette bague, pour le passage de cet axe, est excentré par rapport au centre $O_2$ de cette bague. L'axe O étant fixe par définition, cet agencement permet de déplacer l'axe $O_1$ de la bague externe 13 soit pour le faire coïncider avec le centre O de l'axe fixe 3 (position schématisée sur la Figure 4), soit pour l'en écarter plus ou moins selon la ligne X-Y, par exemple pour le placer dans la position illustrée à la Figure 5, position dans laquelle il existe un écart E entre les axes O et $O_1$. La variation de cet écart est commandée en faisant tourner les deux bagues excentrées 13 et 14 l'une par rapport à l'autre. A cet effet, ces deux bagues portent des leviers de manoeuvre, respectivement 16 et 17, actionnés par des moyens de commande appropriés (non représentés) placés à la disposition de l'utilisateur du cycle correspondant.

L'élément mené du variateur, en l'occurrence la douille rotative 2, porte deux séries de bielles d'entraînement 18a et 18b qui sont disposées alternativement dans deux plans diamétraux distincts. Les extrémités internes de ces bielles s'articulent sur la douille menée 12 par l'intermédiaire de tourillons 19. Quant à l'extrémité externe de chacune de ces bielles, elle affecte la forme d'une fourche 20 entre les deux branches de laquelle est disposé un galet 21 garni d'une bande de roulement 22 en matière élastique. Ce galet est monté librement rotatif autour d'un axe transversal 23 qui sert également d'axe d'articulation pour deux patins de coïncement 24, disposés de part et d'autre de la fourche correspondante 20. Ces patins sont destinés à constituer des organes d'accouplement unidirectionnel entre le tambour menant 1 et les bielles d'entraînement 18a et 18b portées par la douille menée 20. A ce sujet, il faut remarquer que l'alésage 25, prévu dans chaque patin 24 pour le passage de son axe d'articulation 23, est décalé dans le sens angulaire par rapport au corps de ce patin. Le sens de ce décalage est déterminé par le sens de rotation F du tambour menant du variateur de façon que lors de la rotation de ce tambour, il se produise un coïncement automatique des patins au moins dans l'une des paires de patins d'accouplement, et ce dans les conditions exposées ci-après.

Dans l'exemple représenté, la piste de coïncement des patins d'accouplement 24 comprend deux parties concentriques disposées de part et d'autre de celle-ci, à savoir une partie externe formée par l'anneau 8 de surface cylindrique et une partie interne constituée par deux gorges circulaires 26 de profil triangulaire. La piste externe cylindrique 8 est commune aux deux séries de patins 24 disposées de part et d'autre des bielles d'entraînement 18a et 18b. Quant à chacune des gorges 26, elle est particulière à l'une de ces deux séries de patins. A cet effet, ces deux gorges, qui sont ménagées dans des épaulements internes 27 des flasques 6 et 7 du tambour 1, sont situées dans les deux plans diamétraux correspondants.

Du côté externe, chaque patin 24 comporte une face courbe 28 légèrement convexe qui est disposée en regard de la piste externe cylindrique 8. Par contre, du côté interne, chaque patin comporte une partie 29 en forme de coin qui est engagée à l'intérieur de la gorge 26 correspondante et est adaptée à s'y coïncer, la pente des faces inclinées de ce coin étant identique à celle des parois de cette gorge.

Le fonctionnement du présent variateur est le suivant :

## 1°- VITESSE EGALE ENTRE L' ELEMENT MENANT ET L'ELEMENT MENE:

Lorsque l'axe $O_1$ du tambour menant 1 est en position de coïncidence avec le centre O de l'axe 3 de la roue (position centrée représentée à la Figure 4), les différents patins de coïncement 24 se trouvent tous placés sur une même circonférence. Etant donné qu'ils sont ainsi à égale distance de leur axe de rotation, aucune vitesse différentielle n'apparaît entre eux. En conséquence, la douille menée 2 est entraînée à la même vitesse que le tambour menant 1 et le pignon denté 10 qui en est solidaire.

## 2°-VARIATION DE VITESSE ENTRE L'ELEMENT MENANT ET L'ELEMENT MENE:

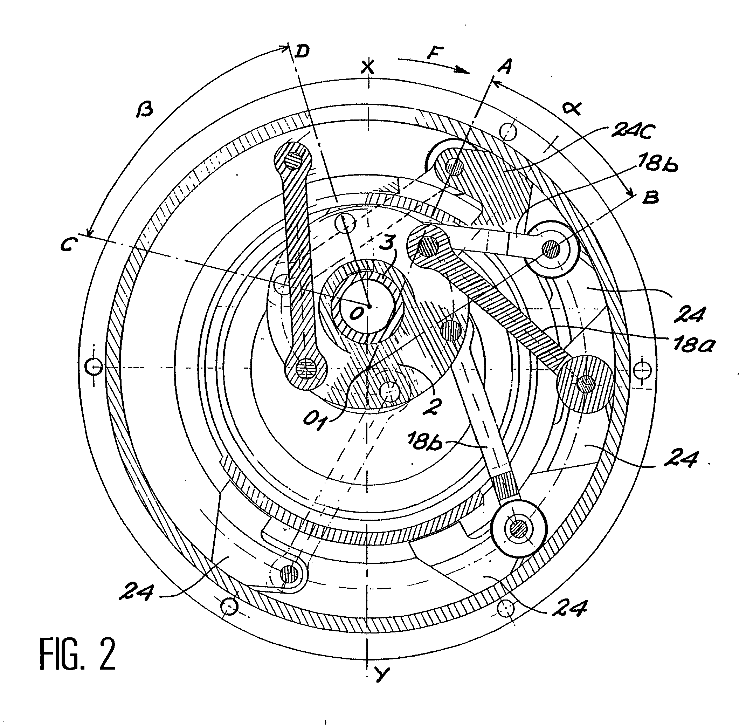

En faisant tourner les deux bagues excentrées 13 et 14 l'une autour de l'autre, il est possible de déplacer l'axe $O_1$ de la bague externe 13, donc l'axe de rotation du tambour menant 1, par rapport à l'axe de la roue pour réaliser un excentrement E plus ou moins important. Cet excentrement amène les bielles d'entraînement 18a et 18b à prendre des positions angulaires différentes comme représenté sur la Figure 2. En conséquence, les angles parcourus par les différentes patins de coïncement 24 deviennent différents.

Il se produit alors un coïncement des patins 24 de chaque paire dans le secteur angulaire à l'intérieur duquel ces patins se trouvent être les plus proches du centre 0 de la roue. Comme représenté sur la Figure 2, il s'agit du secteur délimité par les rayons $O_1A$ et $O_1B$, et qui correspondent à l'angle $\alpha$. En conséquence, les patins 24c de la paire de patins qui se touve alors situé dans ce secteur $\alpha$ sont amenés à se coïncer entre la piste externe cylindrique 8 et les gorges internes 26 de sorte qu'ils assurent alors l'accouplement entre le tambour menant 1 et les bielles d'entraînement de la douille menée.

Compte tenu du décalage angulaire entre les patins de coïncement 24 et le pied, ou extrémité interne des bielles d'entraînement, la partie correspondante de la douille menée 2 parcourt l'angle $\beta$, compris entre les rayons OC et OD pendant que les patins considérés 24c parcourent eux-mêmes l'angle $\alpha$ . Or, à cet endroit, ce dernier est plus faible que l'angle $\beta$ . Il en résulte donc une différence de vitesse entre le tambour menant et la douille menée. En faisant varier de façon continue la valeur de l'excentrement E, on obtient donc par la même une variation également continue de cette différence de vitesse.

Il convient de noter que chaque paire de patins devient motrice à son tour, sur une partie de la trajectoire parcourue autour de l'axe de la roue. A ce sujet, il faut noter qu'une paire de patins sort de la zone de traction, correspondant à sa période de coïncement, au moment précis où la paire suivante de patins y pénêtre, leur vitesse étant identique à cet instant.Pendant ce temps, tous les autres patins glissent sur les pistes disposées en regard. Du reste les galets 21 facilitent ce glissement en roulant alors contre l'anneau cylindrique 8.

Grâce à la conception des organes d'accouplement, constitués par les patins de coïncement 24, l'accouplement entre le tambour menant et les bielles d'entraînement de la douille menée peut s'effectuer en toute position, contrairement à ce qui est le cas avec un système d'accouplement faisant emploi de cliquets coopérant avec une roue à rochet. Par ailleurs, il est ainsi possible de transmettre des couples très importants et ce , du fait même que les surfaces de coïncement des patins 24 sont elles-mêmes très importantes. Ceci résulte évidemment du fait de la présence des coins 29 qui se trouvent en appui sur les parois correspondantes des gorges 26 de profil triangulaire. La possibilité de transmettre des couples importants résulte également du fait que chaque bielle d'entraînement porte, dans le cas présent, non pas un seul patin de coïncement, mais deux, lesquels sont disposés de part et d'autre de son extrémité externe.

Il faut également observer que les conditions de coïncement des patins d'accouplement sont excellentes. En effet, le coïncement de chacun de ceux-ci s'effectue automatiquement du fait de son cabrage et de son arc-boutement entre la piste externe formée par l'anneau cylindrique 8, et la piste interne constituée par l'une ou l'autre des gorges 26 de profil triangulaire, le cabrage des patins résultant du décalage angulaire de leur axe d'articulation 23 par rapport à leur corps de coïncement. Cependant les patins de coïncement prévus aux extrémités externes des bielles d'entraînement peuvent faire l'objet de diverses variantes de réalisation.

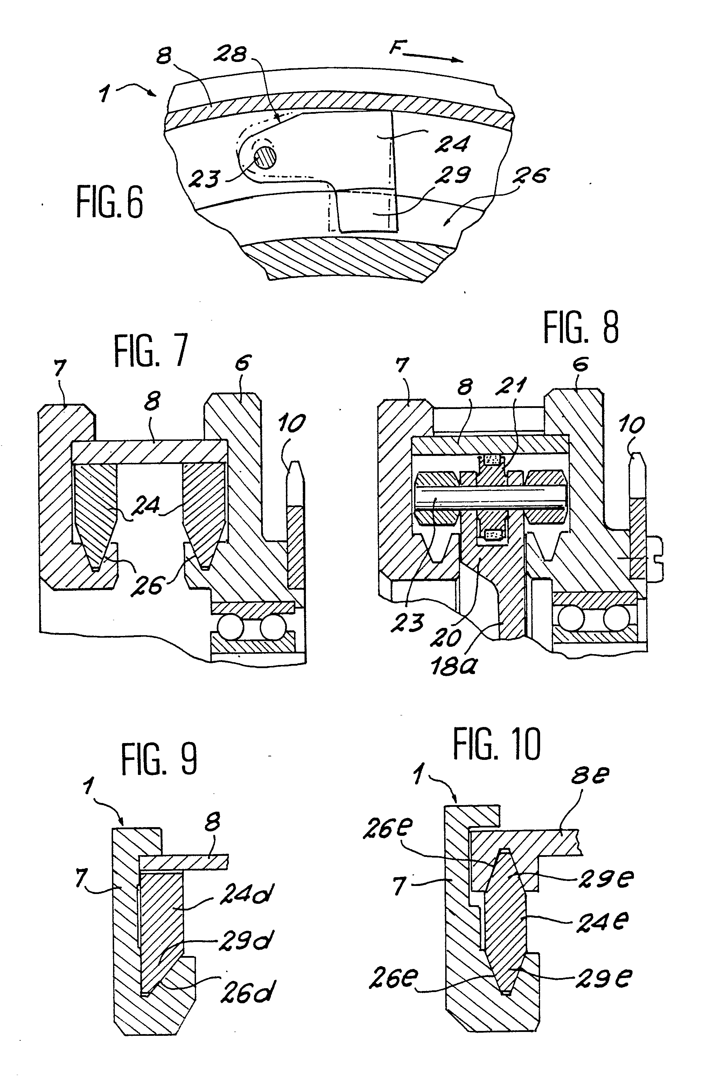

Ainsi la figure 9 représente une variante dans laquelle le coin 29d de chaque patin correspondant 24d présente une seule pente inclinée. Bien entendu, les gorges annulaires 26d ont alors un profil correspondant. Du côté externe il est prévu, comme précédemment, un anneau 8 constituant une piste cylindrique commune pour les deux paires de patins prévues à l'extrémité externe des bielles d'entraînement.

La figure 10 représente une autre variante dans laquelle les patins de coïncement correspondants 24e comportent un coin 29e à la fois du côté externe et du côté interne. Dans ce cas, les flasques latéraux 6 et 7 du tambour 1 comportent, comme précédemment, deux gorges 26e de section triangulaire. Mais en plus l'anneau cylindrique externe correspondant 8e présente lui-même deux gorges similaires 26e destinées à recevoir les coins 29e des patins qui sont prévus du côté externe de ceux-ci.

Dans ces différents cas, la forme de la section des coins de coïncement et des gorges correspondantes pourraient varier et pourraient revêtir des formes appropriées de contour triangulaire, trapézoïdal ou autre.

Eventuellement, au lieu de comporter une paire de deux patins à leur extrémité externe, les bielles d'entraînement 18a et 18b pourraient être équipées d'un seul patin de coïncement, tous les patins prévus gravitant dans un même plan diamétral. Par ailleurs, l'agencement d'ensemble pourrait être inversé. En effet, la douille centrale 2 pourrait fort bien constituer l'élément menant du variateur, auquel cas le tambour externe 1 en serait l'élément mené.

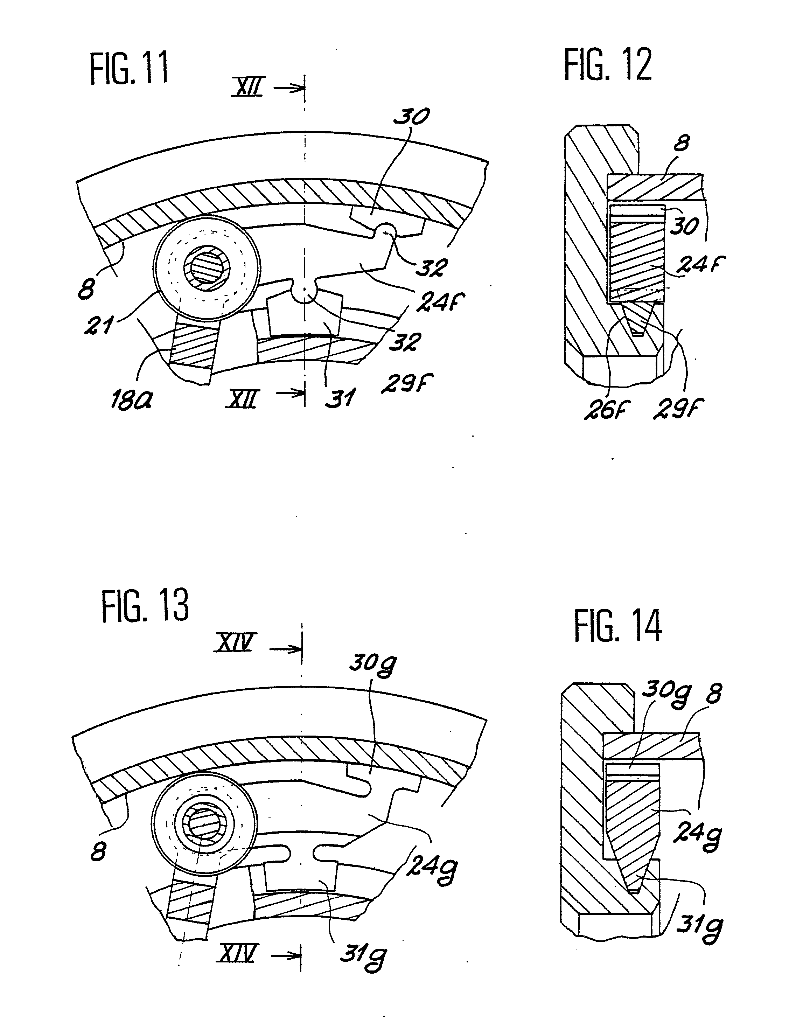

Les figures 11 et 12 représentent une autre forme de réalisation particulière des patins de coïncement portés par l'extrémité externe des bielles d'entraînement 18a et 18b. Cette forme de réalisation est conçue de façon à permettre une meilleure adaptation des surfaces d'appui de ces patins sur les pistes correspondantes de coïncement. A cet effet, ces surfaces d'appui sont constituées par deux sabots 30 et 31, disposés respectivement contre le côté externe et contre le côté interne du corps 24f du patin correspondant. Ces deux sabots s'articulent, par l'intermédiaire de bossages 32 sur l'un ou l'autre côté du corps du patin. Ceci permet leur parfaite adaptation contre les parois de coïncement correspondantes. La surface externe du patin 30 présente une courbure similaire à celle de la piste constituée par l'anneau cylindrique 8. Quant au patin interne 31, il comporte un coin 29f pour son coïncement à l'intérieur de la gorge correspondante 26f dans laquelle il se trouve placé. Comme précédemment, l'extrémité externe la bielle d'entraînement correspondante porte un galet 21 susceptible de rouler contre la piste cylindrique 8 lorsque les patins respectifs ne sont pas en position de coïncement.

Les figures 13 et 14 représentent une autre forme de réalisation conçue dans le même but que celle illustrée aux figures 11 et 12, c'est-à-dire pour permettre une parfaite adaptation des surfaces d'appui des patins d'accouplement contre les pistes de coïncement correspondantes. Dans cette forme de réalisation, ces surfaces d'appuis sont constituées par des sabots 30g et 31g faisant partie intégrante du corps 24g du patin correspondant. Mais celui-ci comporte un profil tel que ces sabots présentent une certaine liberté d'orientation par déformation élastique des zones de liaison avec le corps même du patin. Ceci permet une parfaite adaptation sur les surfaces correspondantes de coïncement.

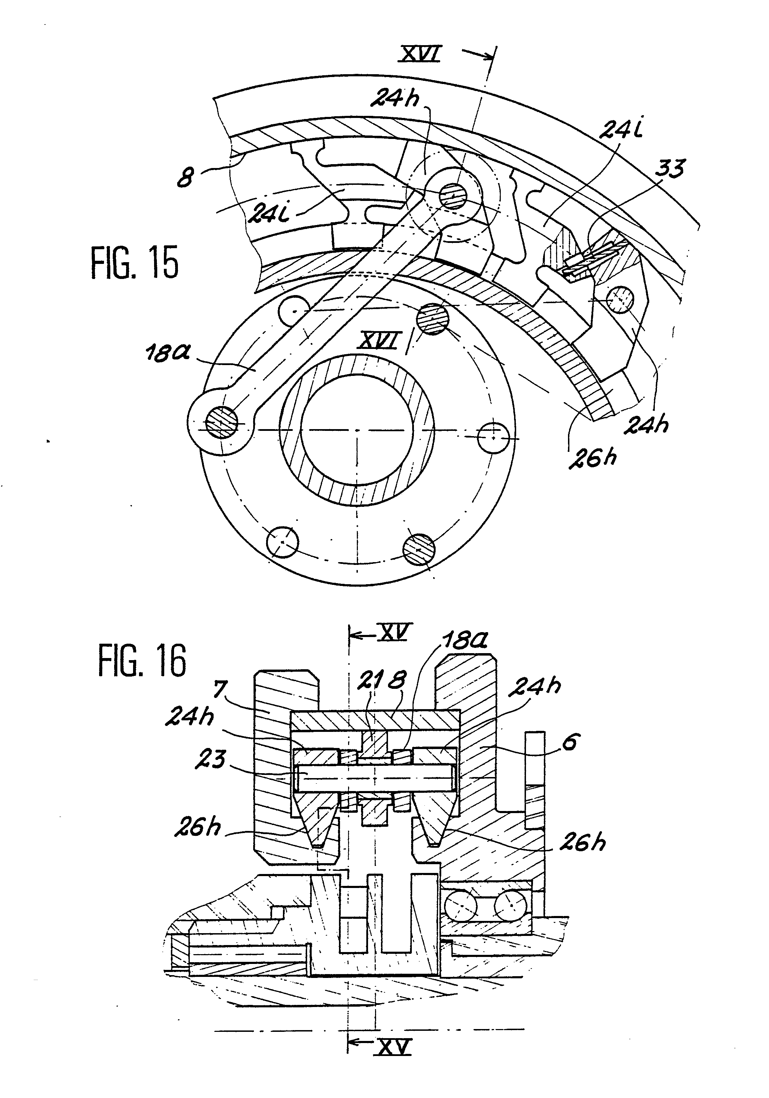

Les figures 15 et 16 représentent une autre forme de réalisation dans laquelle les patins d'accouplement sont réalisés en deux parties de façon que leur coïncement, par arc-boutement contre les pistes d'appui prévues de part et d'autre, puisse s'effectuer dans d'excellentes conditions, même en cas de grande vitesse de rotation du variateur. En effet, dans un tel cas, la force centrifuge peut avoir un effet néfaste pour le bon coïncement des coins internes des patins d'accouplement dans les gorges correspondantes 26, 26d ou 26e.

Pour résoudre ce problème, chaque patin d'accouplement est constitué par deux parties distinctes, à savoir : un patin principal 24h, articulé en bout de la bielle d'entraînement correspondante, et un patin complémentaire 24i sur lequel le patin principal peut prendre appui, et qui est relié à celui-ci par un élément élastique de flexion 33.

Comme représenté sur la figure 16, les deux patins principaux 24h, prévus en bout d'une bielle d'entraînement 18a ou 18b, sont montés sur un axe 23 porté par celle-ci et sur lequel est également monté le galet correspondant 21. Chacun de ces patins principaux est attelé à un patin complémentaire 24i. Du côté externe, tous ces patins présentent une surface convexe de même courbure que la piste cylindrique 8. Du côté interne, chaque patin principal 26h et le patin complémentaire correspondant comportent l'un et l'autre un coin engagé dans une gorge 26h de section triangulaire. A ce sujet, il faut noter qu'il est prévu deux gorges 26h disposées dans deux plans parallèles et chaque patin principal 24h et le patin complémentaire correspondant 24i, gravitent dans la même gorge annulaire 26h.

Lorsque les flasques 6 et 7 du tambour sont entraînés dans le sens moteur, les patins principaux 24 h, attelés à la bielle 18a ou 18b, qui se trouve en position d'entraînement, viennent prendre appui sur les patins complémentaires correspondants 24i. Du fait du frottement ceux-ci se bloquent contre les pistes de coïncement, de sorte que les patins principaux se bloquent aussi contre celles-ci, ce qui assure l'entraînement de la bielle respective et celui du moyeu.

L'intérêt de ce système est que les patins complémentaires se coïncent, quelque soit la réaction sur les patins principaux, leur coïncement étant uniquement fonction du coefficient de frottement et de paramètres géométriques. Ainsi, le blocage est assuré, quelque soit la vitesse de rotation de l'ensemble.

L'élément élastique de liaison 23, prévu entre chaque patin principal 24h et le patin complémentaire correspondant 24i, est également susceptible d'assurer un rattrapage du jeu, si cet élément est légèrement précontraint lors du montage.

Ainsi qu'il a déjà été indiqué, le variateur selon l'invention peut être utilisé pour des applications autres que l'équipement de la roue arrière motrice d'une bicyclette. En effet, ce variateur est susceptible d'être employé dans de nombreux autres cas, dans les domaines les plus divers. Ainsi il peut être utilisé sur des véhicules à moteur ou bien encore sur des machines ou dispositifs mécaniques quelconques.

**Revendications**

1.- Variateur de vitesse comprenant deux éléments - respectivement menant et mené - montés rotatifs autour de deux axes parallèles dont l'un est déplaçable par rapport à l'autre, ces deux éléments étant reliés par une série de bielles d'entraînement dont l'une des extrémités s'articule sur l'un d'eux en différents points d'un cercle de même axe, cependant que leur extrémité opposée est susceptible d'être accouplée avec l'autre élément en un point d'un cercle de même axe que cet éléments, grâce à des moyens d'accouplement unidirectionnels, la variation de l'écartement entre les axes des deux éléments permettant de faire varier le rapport de transmission de façon continue, caractérisé en ce que les moyens d'accouplement des bielles d'entraînement (18a, 18b) avec l'un des éléments (1) de ce variateur consistent en des patins (24, 24d, 24e) montés articulés sur l'extrémité correspondante de ces bielles et aptes à se coincer, chacun à tour de rôle, sur une piste circulaire prévue sur l'élément correspondant (1) du variateur, cependant que les autres patins glissent alors sur cette piste, toutes les bielles d'entraînement (18a, 18b) gravitant dans un même plan diamétral.

2.- Variateur de vitesse selon la revendication 1, caractérisé en ce que les patins d'accouplement (24, 24d, 24e) sont disposés entre deux pistes concentriques de coïncement prévues sur l'élément correspondant de ce variateur et l'agencement est tel que ces patins soient aptes à se coïncer par arc-boutement entre ces deux pistes concentriques.

3.- Variateur de vitesse selon l'une des revendications précédentes, caractérisé en ce que chaque patin d'accouplement (24, 24d et 24e) s'articule sur l'extrémité correspondante de la bielle d'entraînement respective (18a, 18b) en un point (23) qui est décalé angulairement par rapport au corps de ce patin, le sens de ce décalage angulaire étant déterminé par le sens de rotation de l'élément menant (1) du variateur.

4.-Variateur selon la revendication 2, caractérisé en ce que l'une des pistes de coïncement est cylindrique (8), alors que l'autre est constituée par une gorge annulaire (26, 26d) de section triangulaire ou trapézoïdale, les patins d'accouplement présentant, en regard, des surfaces d'appui de même forme.

5.- Variateur de vitesse selon la revendication 2, caractérisé en ce que les pistes de coïncement, prévues de part et d'autre des patins d'accouplement, sont constituées l'une et l'autre par des gorges annulaires (26e) de section triangulaire ou trapézoïdale.

6.- Variateur de vitesse selon la revendication 4, caractérisé en ce qu'en regard de la piste de coïncement (8), de surface cylindrique, chaque patin d'accouplement (24, 24d, 24e) comporte un galet rotatif (21) apte à faciliter le libre déplacement du patin correspondant lorsque celui-ci n'est pas en position de coïncement.

7.- Variateur de vitesse selon l'une des revendications 1 à 4 ou selon la revendication 5, caractérisé en ce que les bielles d'entraînement (18a, 18b) sont disposées alternativement dans deux plans diamétraux parallèles et leur extrémité libre porte deux patins d'accouplement (24, 24d, 24e) disposés de part et d'autre et qui pour toutes ces bielles sont situés dans deux mêmes plans diamétraux pour coopérer avec deux gorges annulaires distinctes de coïncement (26, 26d, 26e) placées dans ces deux plans et un anneau cylindrique commun (8).

8.- Variateur de vitesse selon l'une des revendications 1 à 7, caractérisé en ce que les surfaces d'appui des patins d'accouplement (24f) sont constitués par des sabots (30,31) montés articulés contre l'un et l'autre côtés de ces patins.

9.- Variateur de vitesse selon l'une des revendications 1 à 7, caractérisé en ce que les surfaces d'appui des patins d'accouplement (24g) sont constitués par des sabots (30g, 31g) faisant partie intégrante du corps de ces patins, celui-ci étant conformé de façon que ces sabots aient une certaine liberté de débattement élastique.

10.- Variateur de vitesse selon l'une des revendications 1 à 7, caractérisé en ce que les patins d'accouplement, réalisés en deux parties, à savoir : une partie principale (24h) portée par la bielle d'entraînement correspondante (18a, 18b), et une partie complémentaire (24i) reliée à la partie principale correspondante par un élément élastique de liaison (33), chaque partie principale étant apte à prendre appui sur la partie complémentaire correspondante.

# FIG. 1

FIG. 2

EP 0 362 016 A1

# FIG. 3

FIG. 4

FIG. 5

EP 0 362 016 A1

FIG.6

FIG. 7

FIG. 8

FIG. 9

FIG. 10

EP 0 362 016 A1

## FIG. 11

30
32
24f
32
29f
8
21
18a
XII
XII
31

## FIG. 12

8
30
24f
26f    29f

## FIG. 13

30g
24g
8
31g
XIV
XIV

## FIG. 14

30g  8
24g
31g

EP 0 362 016 A1

FIG. 15

FIG. 16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 032 888 (VN HEE) <br> * Page 2, ligne 25 - page 5, ligne 26; figures 1,2 * | 1,3 | F 16 H 29/16 <br> B 62 M 9/08 |
| Y | | 2 | |
| A | | 7 | |
| | --- | | |
| X | GB-A- 454 640 (ANDERSON) <br> * Page 3, ligne 73 - page 4, ligne 20; page 4, lignes 54-64; figures 1,4 * | 1 | |
| | --- | | |
| Y | EP-A-0 273 023 (LIBENS) <br> * Colonne 3, ligne 32 - colonne 4, ligne 20; figures 1-4 * | 2 | |
| A | | 1,3 | |
| | --- | | |
| A | FR-A- 567 857 (MICHEL) <br> * Page 1, ligne 23 - page 2, ligne 38; figures 1-3 * | 1,2,6 | |
| | --- | | |
| A | EP-A-0 280 481 (BRIDGESTONE) <br> * Colonne 4, ligne 8 - colonne 5, ligne 3; figures 1-4 * | 1,4,7 | DOMAINES TECHNIQUES RECHERCHES (Int. Cl.5) <br><br> F 16 H <br> B 62 M |
| | ----- | | |

Le présent rapport a été établi pour toutes les revendications

| Lieu de la recherche | Date d'achèvement de la recherche | Examinateur |
|---|---|---|
| LA HAYE | 18-12-1989 | FLODSTROEM J.B. |